# EUROPEAN PATENT APPLICATION

(11) **EP 2 461 410 A1**
(43) Date of publication of application: **06.06.2012**
(21) Application number: 10804021.3
(22) Date of filing: 16.03.2010
(51) Int. Cl.: H01M 8/06, H01M 8/04, H01M 8/10

(54) **DEVICE FOR REMOVING GENERATED WATER**

(30) Priority: 31.07.2009 JP 2009180091
(71) Applicant: Sanyo Electric Co., Ltd., Osaka 570-8677 (JP)
(72) Inventor: NISHIKAWA, Masato, Moriguchi-shi Osaka 570-8677 (JP); NAKAMURA, Takahiro, Moriguchi-shi Osaka 570-8677 (JP)
(74) Representative: Glawe, Delfs, Moll
(86) International application number: PCT/JP2010/001866
(87) International publication number: WO 2011/013268

(57) **Abstract**

Generated water is quickly and surely removed from a generated water discharge face of equipment which discharges generated water. There are provided equipment 12 having a discharge face 11 for discharging generated water, and a diaphragm 14 disposed so as to be face the discharge face 11 of the equipment 12 through a predetermined gap 13. The diaphragm 14 has plural projections 15 projecting into the gap 13 , and by vibrating the diaphragm 14, generated water is atomized or vaporized and removed to the outside of the gap 13.

## Description

### Technical Field

The present invention relates to a generated water removing device, and particularly to a generated water removing device that can quickly and surely remove generated water generated in portable and compact equipment.

### Background Art

Attention has been hitherto paid to fuel cells as energy sources for various kinds of electric/electronic equipment because the fuel cells have high energy conversion efficiencies and also generate no harmful substance through power generating reactions.

A unit cell constituting a fuel cell has an electrolytic layer and an oxidant electrode and a fuel electrode disposed at both the sides of the electrolytic layer to form a membrane electrode assembly (MEA).
Here, the unit cell contains an oxidant electrode side electrical conductive plate having plural air supply grooves which are concaved so as to cover the surface of the oxidant electrode constituting the membrane electrode assembly. Furthermore, the unit cell contains a gas separator disposed outside the oxidant electrode side electrical conductive plate. Furthermore, the unit cell contains a fuel electrode side electrical conductive plate having plural fuel gas supply grooves which are concaved so as to cover the surface of the fuel electrode constituting the membrane electrode assembly.

In the thus-constructed fuel cell, air is fed into the air supply grooves of the oxidant electrode side electrical conducive plate, and fuel gas is fed into the fuel gas supply grooves of the fuel electrode side electrical conductive plate, whereby power generation is performed.

It has been recently considered that a fuel cell is mounted as a power source in compact electronic equipment. For example, a direct methanol type fuel cell (DMFC) which can be configured to be thinner attracts much attention. In DMFC, oxidized gas such as air, oxygen or the like is supplied to the oxidant electrode, and fuel such as methanol or the like is supplied to the fuel electrode in the form of gas or liquid to perform power generation.

However, in order to mount a fuel cell in compact electronic equipment, when air (oxygen) is supplied as oxidant to the oxidant electrode, a gas supply device for supplying the oxidant is required to be miniaturized.

A device for supplying gas by vibrating a fuel cell has been disclosed as a compact gas supply device (see Patent Document 1 and Patent Document 2, for example). The Patent Document 1 proposes a gas jetting device for jetting gas by using plural chambers constructed by vibrators. Furthermore, the Patent Document 2 proposes a fuel cell having vibration applying means for vibrating an oxidant electrode, a fuel electrode, a separator, etc.

### Prior Art Document

### Patent Document

Patent Document 1 : JP-A-2005-243496
Patent Document 2 : JP-A-2002-203585

### Summary of the Invention

### Problem to be solved by the Invention

With respect to a fuel cell, water is generated in the process of power generation. However, when generated water (generated water) is not well discharged to the outside, it disturbs vibration of a vibrator or directly disturb supply of oxidant, so that efficient power generation cannot be performed.
Therefore, an object of the present invention is to provide a generate water removing device that can quickly and surely remove generated water from a generated water discharge face of equipment which discharges generated water.

### Means of solving the Problem

In order to attain the above object, according to the present invention, a generated water removing device having equipment having a discharge face for discharging generated water, and a diaphragm disposed so as to face the discharge face of the equipment through a predetermined gap is **characterized in that** the diaphragm has a plurality of projections projecting in the gap, and the generated water is atomized or vaporized by vibrating the diaphragm, and removed to the outside of the gap.
According to the above construction, the plural projections provided to the diaphragm atomizes or vaporizes the generated water and removes the generated water to the outside of the gap by vibrating the diaphragm.
Accordingly, the generated water can be surely and quickly removed.

In this case, the plurality of projections may project obliquely along the same direction from the diaphragm.
According to the above construction, the probability that an acoustic beam emitted from one projection is blocked by another projection is reduced, and thus generated water can be surely removed while carried on the acoustic stream.

Furthermore, the projections may be arranged so that the tip portions thereof face an upstream side with respect to a feeding direction of the generated water.
According to the above construction, the acoustic stream can be generated along the feeding direction of the generated water, and the generated water can be surely fed and removed.
Furthermore, the discharge face may be provided with holes through which oxidant is absorbed and the generated water is discharged and constitutes a part of a fuel cell as the equipment, and the projections or the tip portions of the projections are located out of positions corresponding to the holes.
According to the above construction, the projections or the tip portions of the projections do not physically disturb the intake of oxidant and removable of generated water, and the power generation efficiency of the fuel cell can be kept high.

Furthermore, the surfaces of the projections may be formed of hydrophilic material.
According to the above construction, the projections can easily capture generated water, surely atomizes or vaporize the generated water and remove the generated water to the outside of the gap.

Still furthermore, the surface of the discharge face may be formed of water-repellant material.
According to the above construction, when generated water is atomized or vaporized by vibrating the diaphragm, the plural projections provided to the diaphragm can easily release the generated water from the discharge face, and remove the generated water.

### Effect of the Invention

According to the present invention, generated water can be quickly and surely removed from the generated water discharge face of equipment which discharges generated water, and a reaction or treatment which generates generated water in the equipment can be promoted.

### Brief Description of the Drawings

[Fig. 1] is a diagram showing the principle of a generated water removing device according to a first embodiment.
[Fig. 2] is a diagram showing the construction of a portable fuel cell unit having the generated water removing device according to the first embodiment.
[Fig. 3] is a diagram showing the construction of a fuel cell.
[Fig. 4] is a diagram (part 1) showing frequency variation of a piezoelectric element.
[Fig. 5] is a diagram (part 2) showing the frequency variation of the piezoelectric element. ]
[Fig. 6] is a functional block diagram showing a fuel cell unit according to the first embodiment.
[Fig. 7] is a flowchart showing control processing of the fuel cell. Fig. 7(a) is a processing flowchart of an UP mode, and Fig. 7(b) is a processing flowchart of a DOWN mode.
[Fig. 8] is a diagram (part 3) showing the frequency variation of the piezoelectric element.
[fig. 9] is a diagram showing a foldable cellular phone terminal in which a fuel cell having the generated water removing device according to the present invention is mounted.
[Fig. 10] is a diagram when a fuel cell is secured to a cellular phone terminal.
[Fig. 11] is a diagram showing the fuel cell unit mounted in a cover.
[Fig. 12] is a diagram when the fuel cell is secured to another cellular phone terminal.
[Fig. 13] is a diagram showing when the fuel cell is secured to another cellular phone terminal.
[Fig. 14] is a diagram showing the principle of a second embodiment.
[Fig. 15] is a diagram showing a transmission state of an acoustic beam. Fig. 15(a) is a diagram showing an acoustic beam A occurring due to vibration of projections and a diaphragm, and Fig. 15(b) is a diagram showing an acoustic beam B reflected from the projections.
[Fig. 16 is a diagram showing an acoustic pressure distribution. Fig. 16a] is a diagram showing an acoustic pressure distribution in a predetermined direction along an oxidant supply path under a state that no water droplet adheres to a diaphragm, and Fig. 16b) is a diagram showing an acoustic pressure distribution in the same direction as the predetermined direction under a state that a water droplet adheres to the diaphragm.

### Mode for carrying out the Invention

An embodiment according to the present invention will be described hereunder with reference to the drawings.

### [1] First Embodiment

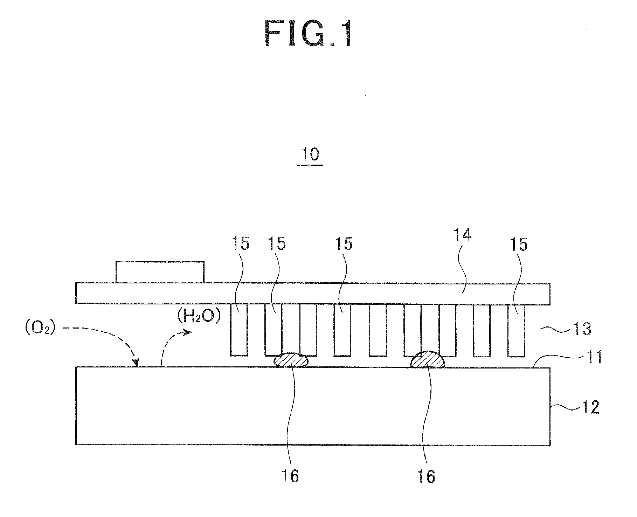

Fig. 1 is a diagram showing the principle of a generated water removing device according to a first embodiment.
A generated water removing device 10 removes generated water generated from a fuel cell 11 as electrical equipment (electronic equipment).
The generated water removing device 10 has equipment 12 having a discharge face 11 from which generated water is discharged, and a diaphragm 14 that is disposed so as to face the discharge face 11 through a predetermined gap 13. The diaphragm 14 has plural projections 15 projecting into the gap 13.
By vibrating the diaphragm 14, generated water 16 is supplied with vibration energy from the projections 15 or the diaphragm 14 to be atomized or vaporized.
As a result, the generated water is quickly removed to the outside of the gap 13 without staying in the gap 13.

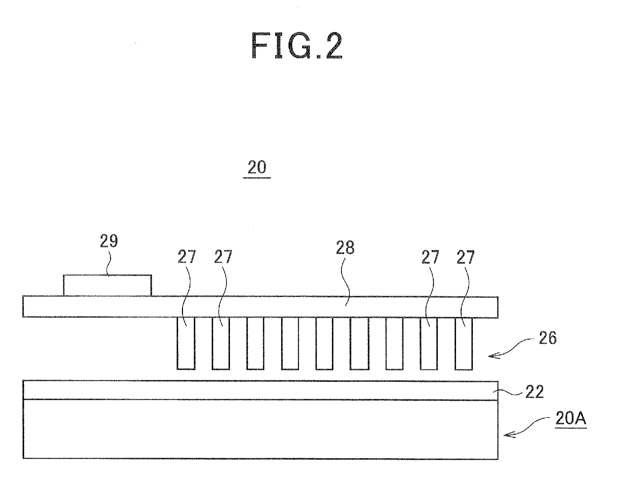

Fig. 2 is a diagram showing the construction of a portable fuel cell unit having a generated water removing device according to the first embodiment.
The fuel cell unit 20 roughly comprises a fuel cell 20A, a flat-plate type diaphragm 28 which is disposed so as to face an oxidant electrode 22 constituting the fuel cell 20 and functioning as a discharge face for discharging generated water through a predetermined gap 26 and also generates acoustic waves and from which plural projections 27 project into the gap 26, and a piezoelectric element 29 for vibrating the diaphragm 28.
The projections 27 may be formed by executing a cutting and erecting work or an embedding or adhesively attaching work on the diaphragm 28, however, the cutting and erecting work is desired because the structure is simplified.

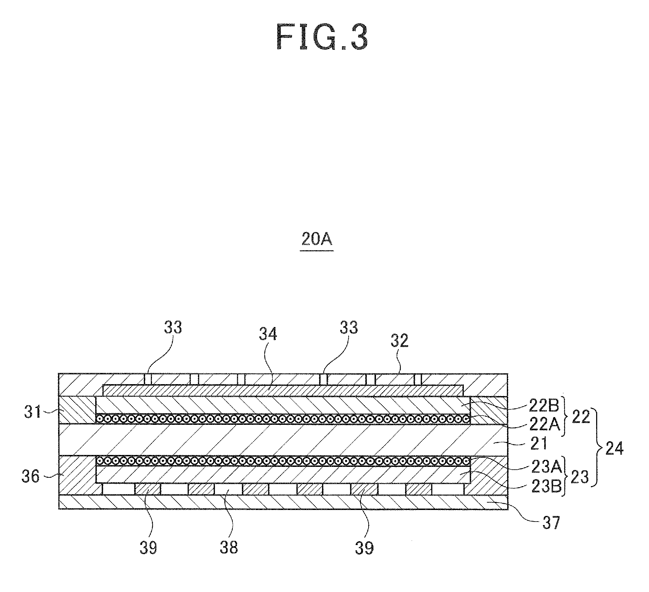

Fig. 3 is a diagram showing the construction of a fuel cell.
The fuel cell 20A has a membrane/electrode j oint member 24 configured by disposing an oxidant electrode 22 and a fuel electrode 23 at both the sides of an electrolytic layer 21. Here, the oxidant electrode 22 functions as an oxidant electrode, and the fuel electrode 23 functions as an anode electrode.
The oxidant electrode 22 is supplied with air containing oxygen as oxidant.
The fuel electrode 23 is suppl ied with aqueous methanol solution or pure methanol (hereinafter referred to as "methanol fuel") by a capillary phenomenon.
As a result, the fuel cell 20A generates electric power through an electrochemical reaction between methanol in methanol fuel and oxygen in air.
The oxidant electrode 22 has an oxidant electrode catalytic layer 22A and an oxidant electrode base member 22B. The oxidant electrode catalytic layer 22A is joined to the electrolytic layer 21. The oxidant electrode base member 22B is formed of a material having an aeration property. Air passing through the oxidant base member 22B is supplied to the oxidant electrode catalytic layer 22A.

An oxidant electrode side gasket 31 is provided at the peripheral edge portion of the electrolytic layer 21 which is located at the oxidant electrode 22 side. An oxidant electrode side housing 32 is mounted through the oxidant electrode side gasket 31. The oxidant electrode side housing 22 is provided with air intake holes 33 through which air containing oxygen as oxidant is taken in and generated water generated through the reaction is discharged. The projections 27 are formed so that the tip portions thereof are not located at the holes 33. This is because the projections 27 are prevented from physically disturbing intake of oxidant and removable of generated water.
Air flowing from the holes 33 flows into an air chamber 34 constructed by the oxidant electrode 22, the oxidant electrode side gasket 31 and the oxidant electrode side housing 32, and reaches the oxidant electrode base member 22B. It is desired that the oxidant electrode side housing 32 has a water-repellent property. As the material constituting the oxidant electrode side housing is used metal material such as stainless-based metal, titan-based alloy or the like, or composite material such as acrylic resin, epoxy, glass epoxy resin, silicon, cellulose, Nylon (registered trademark), polyamide imide, polyallyl amide, polyallyl ether ketone, polyimide, polyurethane, polyether imide, polyether ether ketone, polyether ketone ether ketone ketone, polyether ketone ketone, polyether sulfone, polyethylene, polyethylene glycol, polyethylene terephthalate, polyvinyl chloride, polyoxymethylene, polycarbonate, polyglycolic acid, polydimethylsiloxane, polystyrene, polysulfone, polyvinyl alcohol, polyvinyl pyrrolidone, polyphenylene sulfide, polyphthalamide, polybutylene terephthalate, polypropylene, polyvinyl chloride, polytetrafluoroethylene, hard polyvinyl chloride or the like.

Next, a fuel electrode side gasket 35 will be described.
The fuel electrode side gasket 35 of this embodiment is constructed by a gas-liquid separating filter as a whole. The gas-liquid separating filter has a gas-liquid separating function of transmitting gas generated at the fuel electrode 23 therethrough, and blocking methanol fuel. A material developing the gas-liquid separating function may be a porous material such as woven cloth, non-woven cloth, mesh, felt or a sponge-like material having open bores.

As a composition constituting the porous material described above may be used polytetrafluoroethylene (PTFE), copolymer of tetrafluoroethylene-perfluoroaklyl vinyl ether(PFA), copolymer of tetrafluoroethylene-hexafluoropropropylene (FEP), copolymer of tetrafluoroethylene-ethylene (ETFE), polyvinylidene fluoride (PVDF), polychlorotrifluoroethylene (PCTFE), copolymer of chlorotrifluoroethylene-ethylene (E/CTFE), polyvinylfluoride (PVF), perfluoro cyclic polymer or the like.

The gas-liquid separating filter preferably has a water-repellent property. Here, the water-repellent property is a property of repelling liquid fuel. More specifically, it is defined as a property that the critical surface tension calculated according to Zisman plot is lower than the surface tension of the liquid fuel.

The fuel electrode 23 has a fuel electrode catalytic layer 23A and a fuel electrode base member 23B. The fuel electrode catalytic layer 23A is joined to the electrolytic layer 21. The fuel electrode base member 23B is formed of a porous material. Methanol fusel passing through the fuel electrode base member 23B by the capillary phenomenon is supplied to the fuel electrode catalytic layer 23A. The fuel electrode base member 33B is preferably formed of an electrical conductive material having hydrophilicity. Here, the hydrophilicity described above is a property of fitting in liquid fuel. More specifically, it is defined as a property that the critical surface tension calculated according to Zisman plot is higher than the surface tension of the liquid fuel. As the electrical conductive material is used carbon paper, carbon felt, carbon cloth, a material obtained by coating each of these materials with hydrophilic coating, a material obtained by forming uniform minute holes in a sheet of titan-based alloy or stainless-based alloy through etching and then coating the resultant with corrosion-proof electrical conductive coating (for example, noble metal such as gold, platinum or the like) or the like.

A fuel electrode side gasket 36 is provided at the peripheral edge portion of the electrolytic layer 21 at the fuel electrode 23 side. A fuel electrode side housing 37 is mounted through the fuel electrode side gasket 36, and a fuel chamber 38 in which methanol fuel is stocked is constructed by the fuel electrode 23, the fuel electrode side gasket 36 and the fuel electrode side housing 37. A spacer 39 is provided to the fuel chamber 38.
The methanol fuel stocked in the fuel chamber 38 is directly supplied to the fuel electrode 23. The details of the fuel electrode side gasket 36 will be described later.
It is desired that the fuel electrode side housing 37 has characteristics such as resistance to methanol, acid resistance, mechanical rigidity, etc. Furthermore, it is desirable that the fuel electrode side housing 37 has hydrophilicity. The fuel electrode side housing 37 is provided with a fuel suction unit (not shown) for sucking methanol fuel from a fuel tank (not shown) or the like provided at the outside of the fuel cell 20A, and methanol fuel is supplemented into the fuel chamber 38 as required.

The materials described with respect to the oxidant electrode side housing 32 may be used as the material constituting the fuel electrode side housing 37.
Furthermore, the distance between the fuel electrode 23 and the fuel electrode side housing 37 is kept by the spacer 39. The fuel electrode 23 is pressed against the electrolytic layer 31 by the spacer 39, so that the contact between the fuel electrode 23 and the electrolytic layer 21 is enhanced.

It is desired that the spacer 39 provided in the fuel chamber 38 has characteristics such as methanol resistance, acid resistance, mechanical rigidity, etc. Furthermore, when the spacer 39 is shaped to segmentalize the fuel electrode 23, it is desired that generated gas can pass through the spacer, and thus porous material may be used. For example, as the spacer 39 may be used porous material such as woven cloth, non-woven cloth, mesh or sponge-like material having open bores, which are formed of polyethylene, nylon (registered trademark), polyester, rayon, cotton, polyester/rayon, polyester/acryl, rayon/polychlal or the like, or organic solid of boron nitride, silicon nitride, tantalum carbide, silicon carbide, zeolite, attapulgite, zeolite, silicon oxide, titan oxide or the like in addition to the same porous material as the gas-liquid separating filter described above.

A material which is light in weight and has a high Young's modulus, for example, aluminum is preferably used for the diaphragm 28.
However, when it is formed of metal, duralumin, stainless or titan may be used, when it is formed of ceramic material, alumina, barium titanate, ferrite, silicon dioxide, zinc oxide, silicon carbide or silicon nitride may be used, and when it is formed of plastic material, fluorocarbon resin, polyphenyl sulfide resin, polyether sulfone resin, polyimide, polyacetal, or ethylene-vinylalcohol copolymer (EVOH) may be used.
Furthermore, it is preferable that the height from the surface of the diaphragm 28 to the tip portions of the projections 27 is set in the range from about 2.0 to 3.0mm, and the thickness of the diaphragm 28 is set to 1.0mm or less.
The piezoelectric element 29 is preferably formed of a material having a large piezoelectric constant, for example, lead zirconate titanate (PZT). However, piezoelectric ceramics such as lithium tantalite (LiTa₃), lithium niobate (LiNbO₃), lithium tetraborate (Li₂B₄O₇) or the like, or crystalline quartz (SiO₂) may be used.

Here, gas (air or oxygen) supplied to the oxidant electrode 22 is fed by vibration of the diaphragm 28. Water generated by the oxidant electrode 22 (generated water) is supplied with vibrational energy by the plural projections 27 projecting from the diaphragm 25 to be atomized or vaporized, whereby the generated water is atomized or vaporized, and then the generated water is discharged to the outside of the gap 26.
In this case, the distance between the tip of the projection 27 and the oxidant electrode 22 is preferably set in the range from 0.1 to 1.0mm so that the projections 27 touch generated water on the oxidant electrode 22. That is, the distance between the oxidant electrode 22 and the flat-plate portion of the diaphragm 28 is preferably set in the range from 2.1 to 4.0mm because the height from the surface of the diaphragm 28 to the tip portion of the projection 27 is set in the range from about 2.0 to 3.0mm.

Here, the vibration frequency of the diaphragm 28 based on the piezoelectric element 2 9 may be suitably selected from an ultrasonic wave band, an audio frequency band and a low frequency band. The audio frequency band and the low frequency band have a merit that the energy loss is smaller than the ultrasonic wave band. Furthermore, the ultrasonic wave band and the low frequency band have a merit that it is harder for a user to recognize noises as compared with the audio frequency band.

The surfaces of the projections 27 and the surface at the oxidant electrode 22 side of the diaphragm 28 are hydrophilic, and the surface at the diaphragm 28 side of the oxidant electrode 22 is water-repellant.
The surfaces of the projections 27 and the surface at the oxidant electrode 22 side of the diaphragm 28 may be subjected to a surface treatment of forming coating having hydrophilicity such as titan oxide coating or the like. The hydrophilic coating is not limited to titan oxide, but it may be silicate nitride or iron oxide.

Furthermore, the surface of the oxidant electrode 22 may be subj ected to a surface treatment of forming coating having a water-repellent property such as PTFE (polytetrafluoroethylene) or the like. The coating having the water-repellent property is not limited to PTFE, but it may be formed of FEP (copolymer of tetrafluoroethylene and hexafluoropropylene) or PFA (copolymer of tetrafluoroethylene and perfluoroalkyl vinyl ether.

As described above, generated water generated from the oxidant electrode 22 having the water-repellent surface adheres to the hydrophilic projections 27, and further to the diaphragm 28. The generated water moving from the oxidant electrode 22 to the projections 27, and further to the diaphragm 25 hardly leaks to the outside because of surface tension. By vibrating the diaphragm 28 and further projections 27 with ultrasonic waves, the water adhering to the projections 27 and the diaphragm 28 is atomized or vaporized to become mist (water droplet) or water vapor, and removed to the outside of the gap 26 along the flow of air.

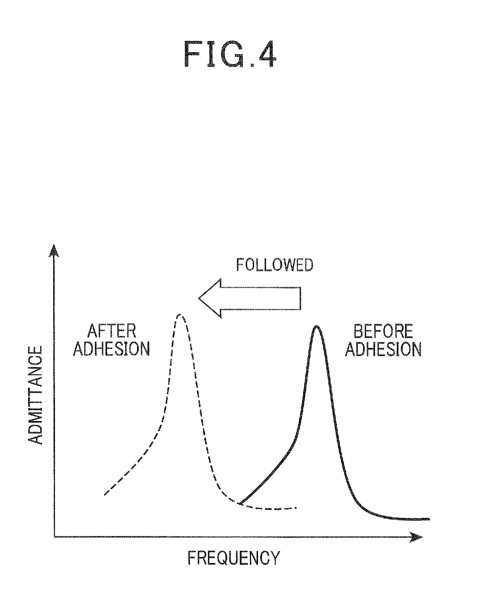

Fig. 4 is a diagram (part 1) showing frequency variation of the piezoelectric element.

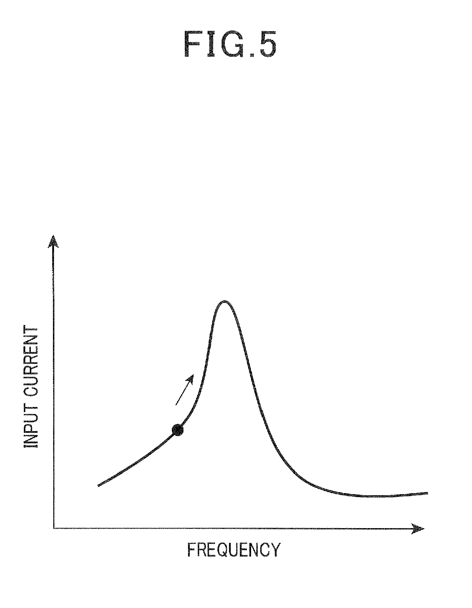

Fig. 5 is a diagram (part 2) showing the frequency variation of the piezoelectric element.
The fuel cell 20A may be provided with a control circuit for controlling the vibration of the diaphragm 28 and giving the resonance frequency of the projections 27 and the diaphragm 28.
In this case, when the generated water adheres to the projections 27 or the diaphragm 25, the resonance frequency concerned varies. Therefore, as shown in Fig. 4, the control circuit performs the control so as to fit to the resonance frequency after the generated water adheres. For example, when a piezoelectric element 29 is used as the control circuit, a frequency at which input current is maximum corresponds to the resonance frequency. Therefore, as shown in Fig. 5, a maximum value at which the input current is maximum is determined, and it is set to the resonance frequency.
In the foregoing description, the piezoelectric element 29 is used as means for vibrating the projections 27 and the diaphragm 28, however, a magnetostrictor may be used in place of the piezoelectric element 29. Furthermore, it is desired that the piezoelectric element 29 and the magnetostrictor are made water-repellent with coating.
The generated water removed to the outside of the gap 26 may be directly discharged to the atmosphere, however, water absorber may be provided to gradually discharge the generated water to the atmosphere.

Next, a method of controlling the fuel cell according to this embodiment will be described.

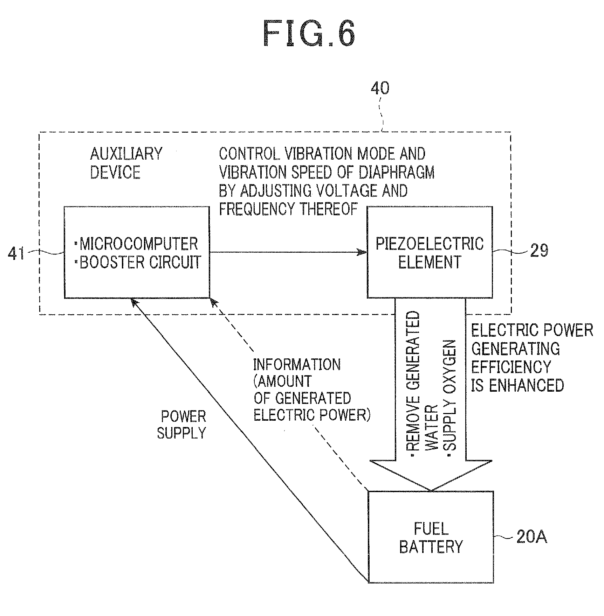

Fig. 6 is a functional block diagram showing a fuel cell unit according to a first embodiment.
Here, a microcomputer/booster circuit 41 and a piezoelectric element 29 are described as auxiliary devices 40 for controlling the fuel cell 20A. However, these auxiliary devices 40 may be designed to be installed in the fuel cell 20A.

The microcomputer/booster circuit 41 supplies the piezoelectric element 29 with a control signal for controlling the vibration mode and the vibration speed of the projections 27 and the diaphragm 28 by adjusting the voltage and frequency thereof. In this case, the voltage waveform applied to the piezoelectric element 29 by the microcomputer/booster circuit 41 is a sine wave, a rectangular wave, a triangular wave, a saw tooth wave or the like in the ultrasonic wave band.
The piezoelectric element 29 vibrates the diaphragm 28 disposed in the fuel cell 20A to supply oxygen and remove generated water, so that the power generation efficiency of the fuel cell 20A can be enhanced.
In this case, the microcomputer/booster circuit 41 may be supplied with power from the fuel cell 20A as shown in Fig. 6, or supplied with power from an external power source (not shown).

Furthermore, information on the amount of generated power may be notified from the fuel cell 20A to the microcomputer/booster circuit 41. Here, when the amount of generated power is larger than a desired amount, the microcomputer/booster circuit 41 reduces the voltage to be applied to the piezoelectric element 29 to reduce the supply amount of oxygen as oxidant, thereby reducing the amount of generated power. On the other hand, when the amount of generated power is smaller than a desired amount, the voltage to be applied to the piezoelectric element 29 is increased to increase the supply amount of oxygen as oxidant, thereby increasing the amount of generated power.

The microcomputer/booster circuit 41 may adjust the distance between the oxidant electrode 22 and the projections 27 by varying the vibration amplitude of the piezoelectric element to vary the removing amount of generated water and the air supply amount, thereby adjusting the power generation efficiency. Furthermore, when there exist plural resonance frequencies of the projections 27 and the diaphragm 28, the microcomputer/booster circuit 51 may change the vibration mode by frequency adjustment, and adjust the supply amount of oxidant and the evaporation amount of generated water. In order to reduce the power consumption, the operation may be intermittently performed during only a required time period.

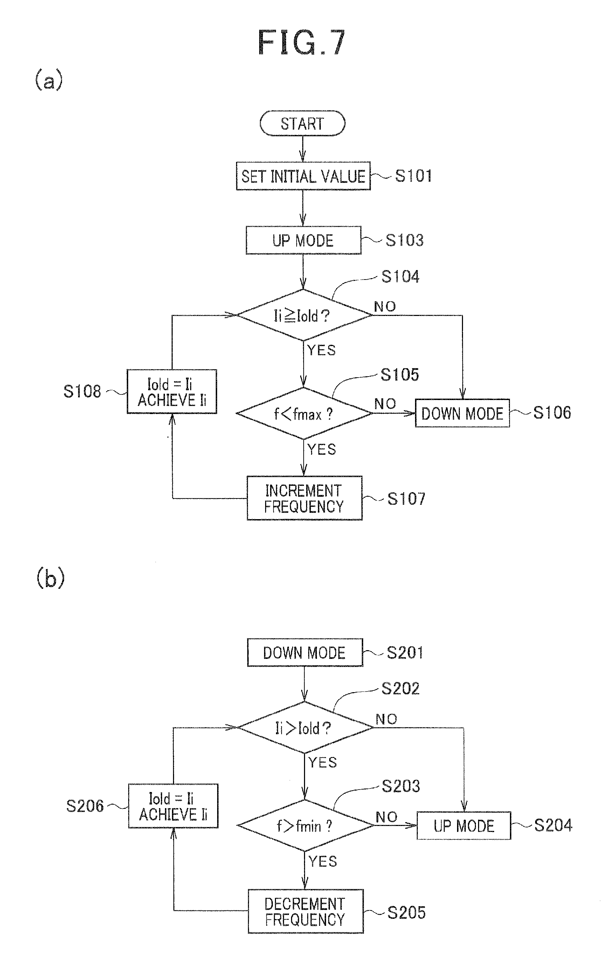

Fig. 7 is a flowchart showing the control processing of the fuel cell.

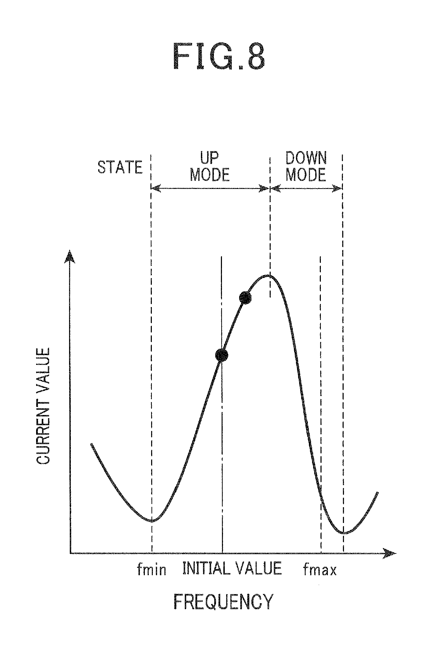

Fig. 8 is a diagram (part 3) showing the frequency variation of the piezoelectric element.
Next, a method of controlling the diaphragm 28 of the piezoelectric element 29 will be described with reference to Figs. 7 and 8. The processing described below is executed by the microcompater/booster circuit 41 for controlling the piezoelectric element 29.

First, the microcomputer/booster circuit 41 sets an initial value of the frequency of the piezoelectric element 29 (step S101). For example, 60kHz is set as the frequency (f) at the initial time of the piezoelectric element 29.
The microcomputer/booster circuit 41 measures a current value at the initially set frequency (f) of the piezoelectric element, and substitutes this value into a current value (Ii) and a current value (Iold). The current value (Ii) represents a current value which is updated every time, and the current value (Iold) represents a previously measured current value. At the first measurement time, the same value obtained through the measurement is stored in the current value (Ii) and the current value (Iold).

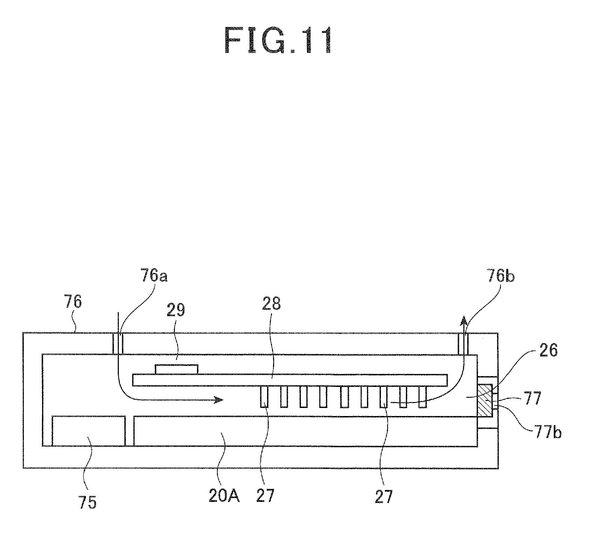

In the following description, a mode in which the frequency is set to be higher than the previously detected frequency is referred to as UP mode, and a mode in which the frequency is set to be lower than the previously detected frequency is referred to as DOWN mode. In this case, a range in which the frequency is increased and reduced is set to the range between preset maximum frequency (fmax) and minimum frequency (fmin) as shown in Fig. 11. The maximum frequency (fmax) and the minimum frequency (fmin) are set so that the range contains a range in which the resonance frequency is estimated to vary in accordance with the adhering amount of generated water as shown in Fig. 4.
Next, the microcomputer/booster circuit 41 shifts the processing to the UP mode (step S103).
Next, the microcomputer/booster circuit 41 determines whether the current value (Ii) is equal to or more than the previous current value (Told) (step S104).
When the current value (Ii) is equal to or more than the previous current value (Iold) in the determination of the step S104 (step S104; Yes), it is determined whether the current frequency (f) is smaller than the maximum frequency (fmax) (step S105). Here, the maximum frequency (fmax) is assumed as a preset value as shown in Fig. 8.
When the current frequency (f) is smaller than the maximum frequency (fmax) in the determination of step S105 (step S105; Yes), the microcomputer/booster circuit 41 increments the frequency (step S107), substitutes the present current value (Ii) into the previous current value (Iold), substitutes the current value after the increment into the current value (Ii) (step S108), and returns to the processing of step S104.
When the current frequency (f) is not smaller than the maximum frequency (fmax) in the determination of step S105, the microcomputer/booster circuit 41 shifts the processing to DOWN mode processing (step S201) shown in Fig. 7(b).
Subsequently, the microcomputer/booster circuit 41. determines whether the current value (Ii) is larger than the previous current value (Iold) (step S202).
When the current value (Ii) is larger than the previous current value (Iold) in the determination of step S202 (step S202; Yes), the microcomputer/booster circuit 41 determines whether the current frequency (f) is larger than the minimum frequency (fmin) (step S203). Here, the minimum frequency (fmin) is assumed to be preset as shown in Fig. 8.
When the current frequency (f) is larger than the minimum frequency (fmin) in the determination of step S203 (step S203; Yes), the microcomputer/booster circuit 41 decrements the frequency (step S205).
Subsequently, the microcomputer/booster circuit 41 substitutes the present current value (Ii) into the previous current value (Iold), substitutes the current value after the decrement into the current value (Ii) (step S205), and returns to the processing of the step S202.
On the other hand, when the current frequency (f) is not larger than the minimum frequency (fmin), that is, the current frequency (f) is equal to or less than the minimum frequency (step S203; No), the microcomputer/booster circuit 51 shifts the processing to the UP mode (step S204). That is, the microcomputer/booster circuit 41 shifts the processing to the step S103 shown in Fig. 7(a), and executes the same processing.
As described above, the microcomputer/booster circuit 41 shifts to the UP mode or the DOWN mode on the basis of the frequency and the current value which are just previously detected, and repeats this processing, whereby the frequency of the piezoelectric element is set to the optimum value.

As a result, according to the fuel cell unit 20 of this embodiment, the diaphragm 28 having the plural projections 27 can be driven in conformity with the power generation state and further the generation state of generated water, and generated water generated through power generation can be easily removed to the outside of the gap 26 by the diffusion of air in the gap 26 and the acoustic stream occurring due to the vibration of the projections 27 and the diaphragm. Accordingly, oxygen as oxidant can be efficiently supplied, and the power generation efficiency of the fuel cell 20A can be enhanced.

The surface at the oxidant electrode 22 side of the diaphragm 28 is hydrophilic, and the surface at the diaphragm 28 side of the oxidant electrode 22 is water-repellant. Therefore, generated water easily drifts from the oxidant electrode 22 side to the projection 27 side of the diaphragm 28, and thus the contact area between the generated water and the projections 27 or the diaphragm 28 increases. As a result, energy is easily transferred, and thus generated water can be more efficiently removed.
Furthermore, as compared with a case where no projection 17 is provided, a larger gap 26 can be secured between the oxidant electrode 22 and the diaphragm 28. Therefore, an effective supply passage (supply flow path) for oxygen as oxidant can be enlarged, so that the pressure loss can be reduced and the power generation efficiency can be enhanced.

When the inside of the electrolytic layer 21 is resonated by excitation of the projections 27 or the diaphragm 28, water adhering to the surface of the oxidant electrode 22 or carbon oxide adhering to the surface of the surface film of the fuel electrode 23 can be diffused to a flow path, and thus the generation efficiency can be more greatly enhanced.

In the foregoing description, the fuel cell unit 20 is configured by providing the generate water device of the embodiment to the fuel cell 20A as a single body. In the following description, a fuel cell having the generated water removing device according to this embodiment is applied to various kinds of electronic equipment.

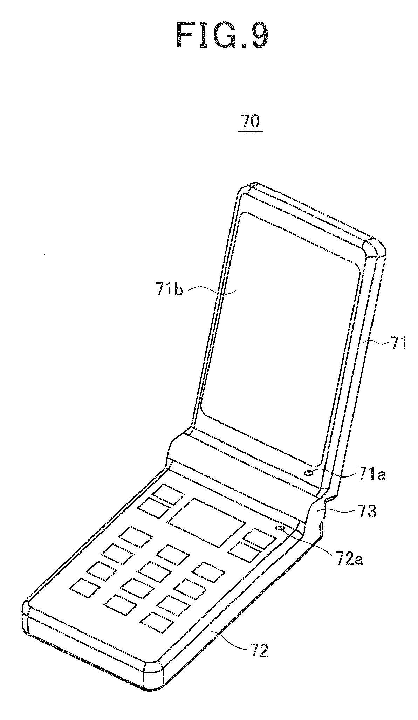

Fig. 9 is a diagram showing a foldable cellular phone terminal containing a fuel cell having the generated water removing device according to the present invention.
In the cellular phone terminal 70, a display side housing 71 and an operation side housing 72 are joined to each other through a hinge mechanism 73 so as to be openable and closable. A main display 71b is provided on the inner surface of the display side housing 71, and a sub display (not shown) is provided on the outer surface. A projection 71a is provided on the inner surface of the display side housing 71 to detect the opening/closing of the display side housing 71 and the operation side housing 72. An opening/closing detection switch 72a is provided on the inner surface of the operation side housing 72 so as to be turned on/off by the projection 71a.

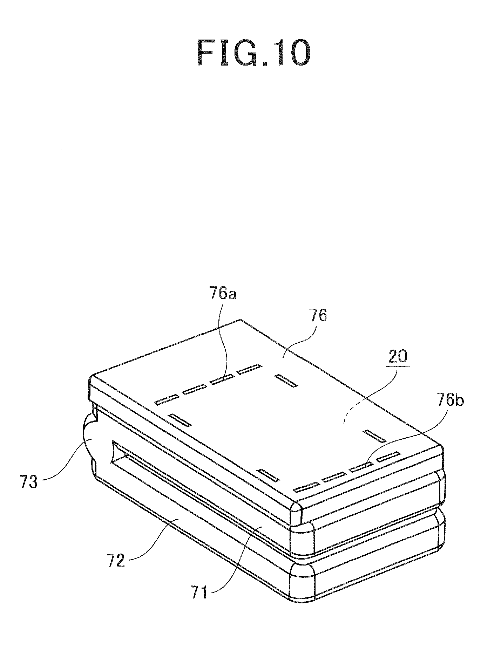

Fig. 10 is a diagram showing a case where a fuel cell is secured to a cellular phone terminal.
The cellular phone terminal 70 contains a fuel cell unit 20 having a generated water removing device according to the present invention contained inside a display side housing 71 or an operation side housing 72, or as shown in Fig. 10, the fuel cell unit 20 having the generated water removing device according to the present invention is secured to the back surface of the display side housing 71.
The fuel cell unit 20 is disposed inside a cover 76, and suction ports 76a for sucking air and discharge ports 76b for discharging air are formed in the cover 76. The suction ports 76a and the discharge ports 76b are provided with gas-liquid separation filters (not shown) so that liquid water occurring in the fuel cell unit 20A is prevented from leaking.

Fig. 11 is a diagram showing the fuel cell unit mounted in the cover.
As shown in Fig. 11, the suction ports 76a and the discharge ports 76b are disposed at the outside of a confronting area of the cover 76 which faces the diaphragm 25. Accordingly, air containing oxygen as oxidant sucked from the suction ports 76a flows into the gap 26 without being blocked by the diaphragm plate 28, and then discharged from the discharge ports 76b without being blocked by the diaphragm 28. As a result, highly efficient drift of air as oxidant gas is implemented. Furthermore, when a water discharge portion 77 is disposed so as to face the terminating portion of the gap 26, water generated at the oxidant electrode side of the fuel cell (unnecessary material) flows to the water discharge portion 77 together with air, so that water can be efficiently discharged from a water discharge port 77b.
Here, the water discharge port 77b of the water discharge portion 77 may be designed in a mesh structure.

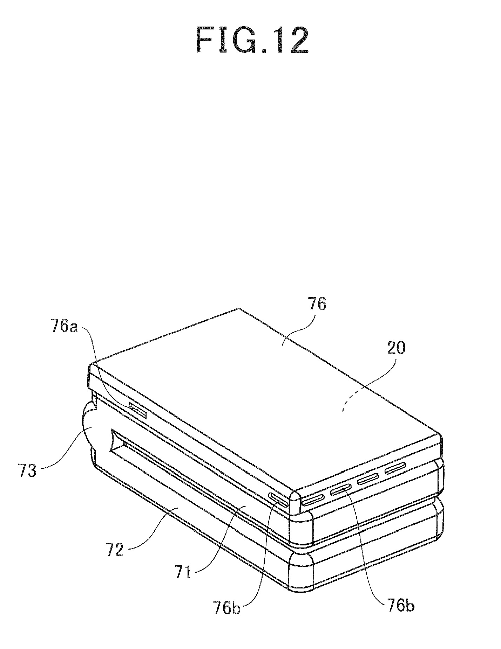

Fig. 12 is a diagram showing a case where the fuel cell is secured to another cellular phone terminal.

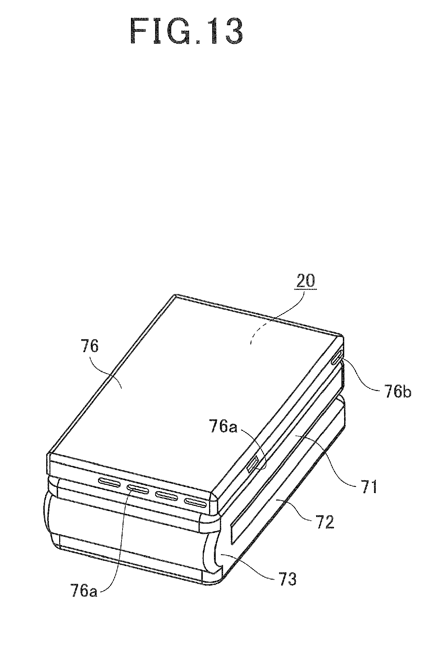

Fig. 13 is a diagram showing a case were the fuel cell is secured to another cellular phone terminal.
As shown in Figs. 12 and 13, the suction ports 76a and the discharge ports 76b may be formed in the side surface or upper and lower end surfaces of the cover 76 in the cellular phone terminal having the fuel cell unit 20 secured to the back surface of the display side housing 71.

### [2] Second Embodiment

In the first embodiment, generated water or gas (air) containing oxidant (oxygen) is fed to the outside of the gap 26 by the diffusion of air and the acoustic stream which are caused by the vibration of the projections 27 and the diaphragm 28. However, actually, the diffusion of air mainly works. In a second embodiment, generated water or gas (air) containing oxidant (oxygen) is fed mainly by an acoustic stream occurring in the gap between the diaphragm and the oxidant electrode.

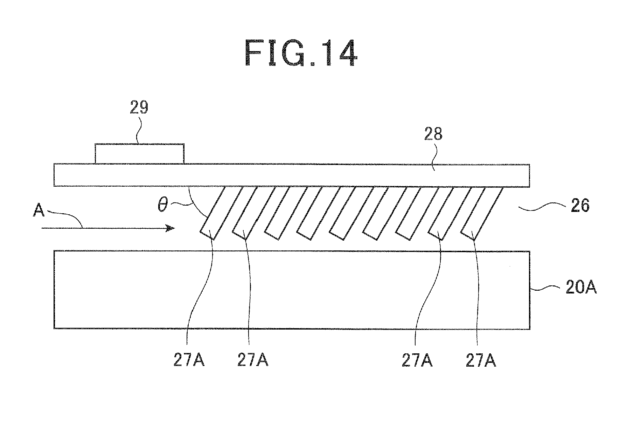

Fig. 14 is a diagram showing the principle of the second embodiment. In Fig. 14, the same parts as the principle diagram of Fig. 1 are represented by the same reference numerals.

Here, the acoustic stream will be described. The acoustic stream is stationary flow of fluid created by an acoustic field. When the diaphragm 28 and the surface of the oxidant electrode 22 functioning as a reflection plate are disposed so as to face each other and vibration is applied to the projections 27 and the vibration plate 28 to generate stationary waves in the ultrasonic wave band, a resonant air columns occur between the projection 27 or the diaphragm. 28 and the surface of the oxidant electrode 22 functioning as the reflection plate, and in connection with occurrence of the resonant air column, eddy current occurs between the projection 27 or the diaphragm 28 and the surface of the oxidant electrode 22 functioning as the reflection plate. By creating a gradient of acoustic pressure when the resonant air column occurs, there occurs a stream of fluid which flows a high acoustic pressure side to a low acoustic pressure side in the flow path. This flow is the acoustic stream. Generated water or gas (air) for supplying oxidant (oxygen) is fed by the thus-occurring acoustic stream in the fuel cell 20A.

As described above, the generated water which is discharged from the oxidant electrode 22 and atomized or vaporized and gas containing oxidant (oxygen) to be fed to the oxidant electrode 22 are efficiently fed by the acoustic stream occurring in the gap 26. Accordingly, generated water can be efficiently removed, and oxygen can be efficiently fed to the oxidant electrode 22.

In this embodiment, the gradient of the acoustic pressure is created as follows.
The diaphragm 28 is provided with plural projections 27A. The plural projections 27A projects obliquely at a predetermined angle θ (<90°) along the same direction from the diaphragm 28, and arranged so that the tip portions of the projections 27A face the upstream side with respect to a feeding direction of generated water (as indicated by an arrow A).

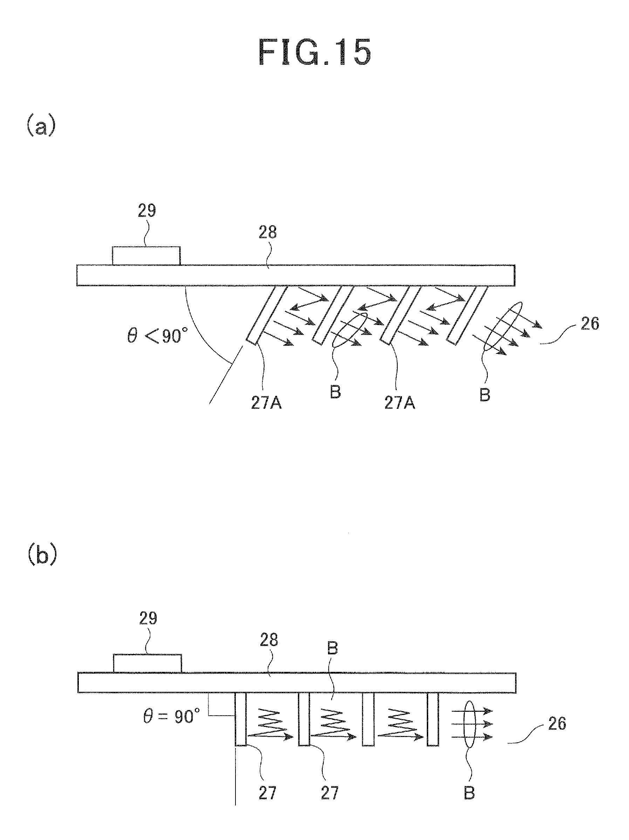

Fig. 15 is a diagram showing a transmission state of an acoustic beam.
As a result, with respect to the acoustic beam A generated when the projections 27A and the diaphragm 28 are vibrated, as compared with projections 27 which vertically project in the gap 26 as shown in Fig. 15(b), the reflection rate of an acoustic beam B reflected from the projections 27A is lowered, and thus an acoustic pressure gradient can be efficiently formed in the gap 26, so that acoustic streams can be efficiently generated and made to efficiently flow to the outside of the gap 26.
Accordingly, removal of generated water and supply of oxygen as oxidant to the oxidant electrode 22 can be efficiently performed, and thus power generation can be efficiently performed.

### [3] Modification of Embodiment

It should be noted that all the embodiments and applications described above are examples, and thus they do not limit the present invention. The scope of the present invention is defined not by the description on the above embodiments and examples of constructions, but by the scope of claims, and further the present invention contains all modifications within the meaning and range of equivalents to the scope of claims.
For example, in the fuel cell described above, when generated water is stored in the gap 26, it serves as flow resistance to air flowing in the gap 26, and a sufficient air supply amount (oxidant supply amount) cannot be secured, so that the power generation efficiency of the fuel cell is lowered.
Therefore, at the time point when water accumulates in the gap 26, the operation state may be switched from a normal operation to a water removing operation.

In this case, the time point when water accumulates in the gap may be determined on the basis of the magnitude of acoustic pressure in the gap 26 which is detected by an acoustic pressure sensor (not shown) disposed in the gap 26 and an acoustic pressure detecting circuit to which the output of the acoustic pressure sensor is input.

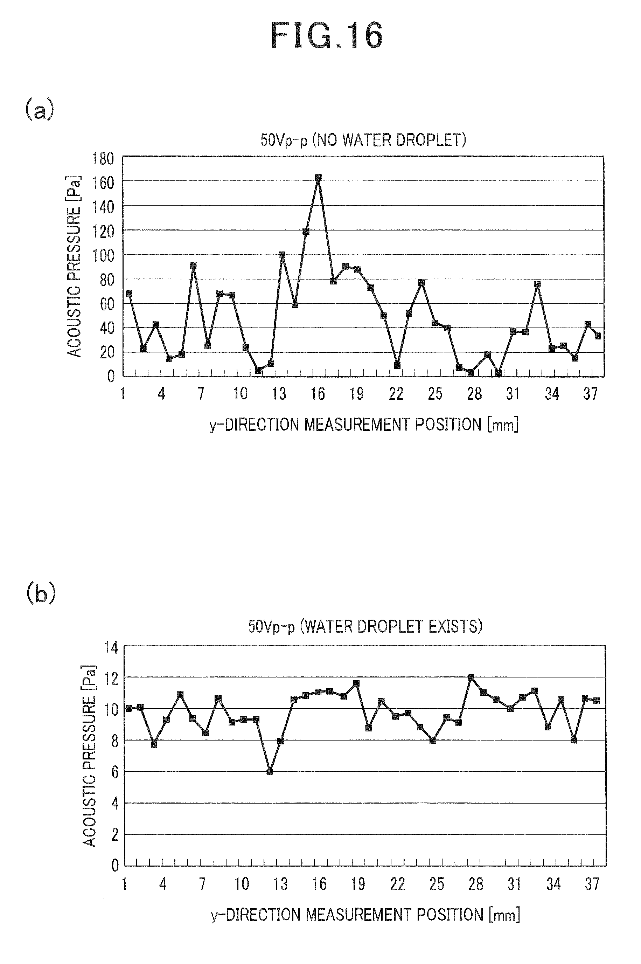

Fig. 16 is a diagram showing an acoustic pressure distribution.
Fig. 16 (a) shows an acoustic pressure distribution in a predetermined direction along the gap 26 under a state that no water droplet adheres to the projection 27 and the diaphragmplate 28, and Fig. 16(b) shows an acoustic pressure distribution in the same direction as the predetermined direction under a state that a water droplet adheres to the projection 27 or the diaphragm 28.

As shown in Fig. 16, the acoustic pressure in the gap 26 is greatly reduced when any water droplet adheres to the projection 27 or the diaphragm 28. Therefore, at the time point when the detected acoustic pressure underruns a predetermined threshold value, generated water can be determined to accumulate in the gap 26, so that the projections 27 and the diaphragm 25 can be operated at the optimum frequency and voltage to remove the generated water.
As a result, the projections 27 and the diaphragm 28 are operated with a frequency and a voltage at which the supply efficiency of oxygen as oxidant to the oxidant electrode 32 is high until generated water accumulates in the gap 26, whereby the power generation efficiency can be increased. In addition, at the time point when generate water causing decrease of the power generation efficiency accumulates, the generated water removing efficiency is increased, whereby a period for which the power generation efficiency is high can be lengthened, so that the effective power generation efficiency can be increased.

In the foregoing description, accumulation of generated water is directly detected, however, a time required for the accumulation of generated water is roughly estimated. For example, a time period for a normal operation (power generating operation) of operating the projections 27 and the diaphragm 28 at a frequency and a voltage at which the supply efficiency of oxygen as oxidant to the oxidant electrode 22 is high is set to a first predetermined time (for example, 10 min), a time period for a generated water removing operation of operating the projections 27 and the diaphragm 28 at a frequency and a voltage at which the generated water removing efficiency is high is set to a second predetermined time (for example, 10 msec), and the normal operation and the generated water removing operation are alternately switched to each other, whereby the power generation efficiency is maintained.

Three or more acoustic sensors may be disposed in the gap 26 to monitor the acoustic pressure distribution in the gap, whereby the time point at which generated water accumulates in the gap 26 is detected.
When generated water is accumulating in the gap 26, the resonance frequency in the gap 26 varies, and thus current flowing in the piezoelectric element 26 for making the projections 17 and the diaphragm 28 vibrate decreases. Accordingly, by detecting this decrease, the control can be shifted from the normal operation control to the generated water removing operation control without using any acoustic sensor.

In this case, in connection with the change from the normal operation control to the generated water removing operation control, the vibrational frequency of the projections 27 and the diaphragm 25 varies, the number of nodes and the number of loops of vibration vary, and the positions of the nodes and the positions of the loops shift during this process. In the generated water removing operation control, a water droplet adhering to the projections 27 and the diaphragm 28 trends to move from the node position to the loop position, and thus water concentrates at the loop position in the vibration after the frequency is changed.

Therefore, in the generated water removing operation control, various positions of the projections 27 and the diaphragm 28 are changed from nodes to loops or from loops to nodes by changing the frequency, whereby generated water can be efficiently atomized or vaporized and removed.
Likewise, the switch from the normal operation to the generated water removing operation may be performed by switching the vibrational frequency of the diaphragm 28 from the resonance frequency of the longitudinal vibration mode to the resonance frequency of the transverse vibration mode.

In the foregoing description, the fuel cell having the generated water removing device according to the present invention is used for the cellular phone terminal. However, the fuel cell is not limited to this style, and it may be used as a power source for any electronic equipment such as a charger for charging a cellular phone or the like, AV equipment such as a video camera or the like, a portable game machine, a navigation device, a handy cleaner, a power generator for business, a robot or the like.
Furthermore, a fuel cell can be designed, as a flat module by using such a generated water removing device.

The generated water removing device according to the present invention is not limitedly used for a fuel cell, but it may be used in any application other than the application to the power source for any electronic equipment as described above. For example, the generated water removing device according to the present invention may be applied to the surface of an electronic circuit portion constituting electronic equipment so that the electronic circuit portion is cooled by gas (air), water which is being fed.

### Description of Reference Numerals

- 10: generated water removing device
- 11: discharge face
- 12: equipment
- 13: gap
- 14: diaphragm
- 15: projection
- 16: generated water
- 20: fuel cell unit
- 20A: fuel cell
- 26: gap
- 27, 27A: projection
- 28: diaphragm
- 29: piezoelectric element
- B: acoustic beam

## Claims

1. A gene rated water removing device having equipment having a discharge face for discharging generated water, and a diaphragm disposed so as to face the discharge face of the equipment through a predetermined gap, **characterized in that** the diaphragm has a plurality of projections projecting in the gap, and the generated water is atomized or vaporized by vibrating the diaphragm, and removed to the outside of the gap.

2. The generated water removing device according to claim 1, wherein the plurality of projections project obliquely along the same direction from the diaphragm.

3. The generated water removing device according to claim 2, wherein the projections are arranged so that the tip portions thereof face an upstream side with respect to a feeding direction of the generated water.

4. The generated water removing device according to any one of claims 1 to 3, wherein the discharge face is provided with holes through which oxidant is absorbed and the generated water is discharged and constitutes a part of a fuel cell as the equipment, and the projections or the tip portions of the projections are located out of positions corresponding to the holes.

5. The generated water removing device according to any one of claims 1 to 4, wherein the surfaces of the projections are formed of hydrophilic material.

6. The generated water removing device according to claim 5, wherein the surface of the discharge face is formed of water-repellant material.
